# EUROPEAN PATENT APPLICATION

(11) **EP 3 960 277 A1**
(43) Date of publication of application: **02.03.2022**
(21) Application number: 21190548.4
(22) Date of filing: 10.08.2021
(51) Int. Cl.: B01D 53/26, F25B 43/00, F25B 9/00

(54) **AIR PREPARATION DEVICE FOR AN AIR-COOLING MACHINE**

(30) Priority: 11.08.2020 CZ 20204530
(71) Applicant: Mirai Intex Sagl, 6830 Chiasso (CH)
(72) Inventor: Tsyplakov, Vladyslav, 1290 Versoix (CH)
(74) Representative: Musil, Dobroslav

(57) **Abstract**

The invention relates to an air preparation device for an air-cooling machine which comprises a pressure cylinder (4) provided with at least one inlet (40, 45) of compressed air and an outlet (44) of compressed air, downstream of which an air cleaning and dehumidifying section (100) is arranged, the outlet of which is connected to the air inlet (15) to the machine. The pressure cylinder (4) is provided with an atmospheric air inlet (40) and a piston compressor (2) connected to the atmospheric air inlet (40) of the pressure cylinder (4) via a first check valve (7) is connected to the atmospheric air inlet (1), whereby between the first check valve (7) and the piston compressor (2), a pressure regulating valve (6) discharging to the atmosphere is included.

## Description

### Technical field

The invention relates to an air preparation device for an air-cooling machine.

### Background art

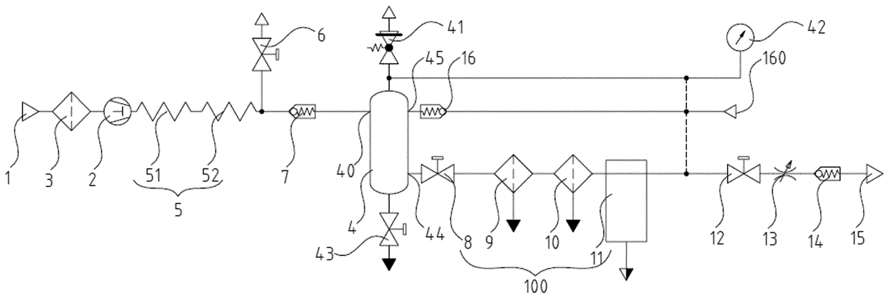

Known are regenerative gas cooling machines with a closed cycle (see publication by Sakun I.A. "Cooling machines", L.: public house Mashinostroenie, 1985, page 360-367, Fig. 8.2), which include a compressor, an incorporated refrigeration device, a detander, a heat exchanger and an engine. Gas proceeds to the compressor with a certain temperature and pressure, it is compressed and its parameters change. The gas then proceeds to a cooling device, where it is cooled by water and led to a detander via a recuperative heat exchanger. Inside the recuperative heat exchanger, heat is removed from the "direct" stream by heating the "return" stream. In the detander, the gas expands and its pressure and temperature decrease. The gas is then fed to the heat exchanger, the temperature of the gas increases and the gas goes to the compressor via the recuperative heat exchanger. The desired temperatures are achieved by selecting the regeneration depth without increasing the pressure ratio in the compressor.

Since the air-cooling machine has a closed air system, air losses occur during its operation at low temperatures, which must be compensated for, taking care of the purity of the incoming air, its low humidity, etc. If the user of an air-cooling machine does not have his own compressed air system suitable for replenishing air losses in the air-cooling machine, it is desirable to provide such a system, which is an objective of the present invention.

When air is used as a cooling agent, difficulties associated with the formation of ice (icing) at the point of contact with the object to be cooled arise inside the device of the air-cooling machine and in the air ducts. This is due to the water content in the air and its freezing and removal when the temperature drops. The freezing causes a decrease in the efficiency of the air-cooling machine operation until it is taken out of service and therefore frequent maintenance of the machine is required. It must be emphasized that firstly, removal of ice from the air ducts and from the devices of the air-cooling machine is not an easy task, secondly, the operation of the system must be stopped during this activity. This means that the air-cooling machines have a significant limitation on the maximum continuous operation time.

The objective of the invention is to reduce or eliminate completely the disadvantages of the background art, especially to increase the efficiency of the air-cooling machine and to ensure the least possible interruption of machine operation.

### Principle of the invention

The objective of the invention is achieved by a device for air reparation for a machine that uses dry air as a working medium, especially for an air-cooling machine, whereby the principle of the invention consists in that the device comprises a pressure cylinder provided with at least one compressed air inlet and at least one compressed air outlet, after which an air cleaning and dehumidifying section is arranged, the outlet of which is connected to the air inlet into the machine, the pressure cylinder being provided with an atmospheric air suction inlet and a piston compressor is connected to the atmospheric air inlet of the pressure cylinder via a first check valve, the piston compressor being connected to the atmospheric air suction inlet, whereby between the first check valve and the piston compressor, a pressure control valve discharging to the atmosphere is included. As a result, air of the required quality and pressure can be supplied to the machine at any time, if necessary, and a regulating pressure relief control valve leading to the atmosphere, serves to remove the overpressure to ensure a smooth start of the piston compressor.

Since the atmospheric air sucked in may contain impurities, a dedusting filter is arranged upstream of the piston compressor.

To reduce the temperature of the atmospheric air sucked in, an air cooler is arranged between the piston compressor and the first check valve. In a preferred embodiment, the air cooler consists of two parts, wherein in the first part of the cooler, the cooling medium is atmospheric air and in the second part of the cooler, the cooling medium is air from the cooling chamber of the air-cooling machine.

According to a second variant, compressed air is supplied to the air preparation device from the machine user's compressed air system and the pressure cylinder is provided with an inlet of compressed air from the machine user's compressed air system to which it is connected in a preferred embodiment via a second check valve.

In both embodiments, the cleaning and dehumidifying section consists of a filter of coarse impurities, a filter of fine impurities and a membrane dryer which are arranged one after the other in the direction of air flow.

To control further air transport to the machine, between the outlet of the cleaning and dehumidifying section and the air inlet of the machine, an inlet valve of the machine, a flow regulator and a third check valve are arranged one after the other in the direction of air flow.

To ensure the safety of the device and air quality, the pressure cylinder is provided with a safety valve, an air pressure sensor and a condensate drain valve.

### Description of drawings

A schematic diagram of the air preparation device according to the invention for both variants is shown in the attached drawing.

### Examples of embodiments of the invention

An air-cooling machine uses dry air as a working medium and has a closed air system. During its operation at low temperatures, air leakages occur and must be compensated for, wherein it is necessary to ensure the purity of the incoming air, its low humidity, etc. It is therefore advisable to provide an air-cooling machine with an air preparation device for supplying air to the air-cooling machine which will be described in an exemplary embodiment below and which can also be used to prepare air for other machines which use dry air as a working medium.

The air preparation device comprises an atmospheric air suction inlet **1** through which the supplied air is sucked in by a piston compressor **2** through a dedusting filter **3** in which coarse impurities are captured. The supplied air is compressed by the piston compressor **2** to the pressure cylinder **4,** in which a pressure of approximately 6 to 8 bar is maintained. Arranged between the piston compressor **2** and the pressure cylinder **4** is at least one air cooler **5** to reduce the temperature of the incoming air before it is fed to the atmospheric air inlet **40** of the pressure cylinder **4.** In the embodiment shown in the drawing, the cooler **5** consists of two parts, wherein the first part **51** of the cooler, atmospheric air is the cooling medium, and in the second part **52** of the cooler the cooling medium is the air from the cooling chamber of the air-cooling machine to achieve maximum reduction of the incoming air temperature. If the device according to the invention is to be used on a machine other than an air-cooling machine, it is sufficient to use the first part **51** of the cooler. Downstream of the air cooler **5,** a pressure relief valve **6** is included for releasing the overpressure, since starting of the piston compressor **2** is only possible if there is no overpressure downstream of the piston compressor **2.** Between the regulating pressure relief valve **6** and the pressure cylinder **4** a first check valve **7** is mounted which prevents air leakage from the pressure cylinder **4** to the atmosphere through the regulating pressure relief valve **6.**

A safety valve **41** and an air pressure sensor **42** are connected to the pressure cylinder **4.** In the lower part of the pressure cylinder **4,** a condensate drain valve **43** is connected, which is coupled to the in a known manner, not shown in more detail. The pressure cylinder **4** is provided with an air outlet **44** downstream of which is arranged an air cleaning and drying section **100,** whose outlet is connected to the air inlet **15** to the machine. The cleaning and drying section **100** comprises an outlet valve **8** of the pressure cylinder **4,** a filter **9** of coarse impurities, a filter **10** of fine impurities and a membrane dryer **11,** which are arranged one after the other in the direction of air flow. The membrane dryer can be replaced by any other suitable dryer. The membrane dryer **11** is provided with a condensate drain. Both the filter **9** of coarse impurities and the filter **10** of fine impurities are provided with a dirt removal system. Between the outlet of the cleaning and drying section **100** and the air inlet **15** of the machine, an inlet valve **12** of the machine, a flow regulator **13** and a third check valve **14** are arranged one after the other in the direction of air flow to prevent the compressed air from escaping from the machine back to the device.

If the user of the air-cooling machine has his own compressed air system **160** suitable for replenishing the air losses in the air-cooling machine or in another machine, this compressed air can be used. In this case, atmospheric air is not fed to the pressure cylinder **4** and the part the device described above is omitted up to the pressure cylinder **4,** in which the inlet **45** of compressed air from the compressed air system of the machine user is formed, wherein the compressed air from the compressed air system of the machine user has a pressure of 6 to 8 bar and is fed via the second check valve **16,** which prevents the compressed air from escaping from the pressure cylinder **4** to the compressed air system of the machine user.

In this embodiment, the safety valve a **41,** the air pressure valve **42** and the condensate drain valve **43** are connected to the pressure cylinder **4.** Downstream of the air outlet **44** from the pressure cylinder **4** is connected the outlet valve **8,** downstream of which is arranged in the direction of air flow the cleaning and drying section **100** in which the outlet valve **8** of the pressure cylinder, the filter **9** of coarse impurities, the filter **10** of fine impurities and the membrane dryer **11** which is provided with a condensate drain are arranged one after the other. The outlet of the membrane dryer **11,** which is at the same time an outlet of the cleaning and drying section **100** is via the inlet valve **12** of the air-cooling machine, the flow regulator **13** and the check valve **14** connected to the air inlet **15** to the air-cooling machine, as in the previous embodiment.

If the machine user has at his disposal a compressed air system **160** and at the same time wishes to use both the above-described devices for air preparation and atmospheric air, both of the above described devices can be used, between which it is possible to switch freely. In this case, the pressure cylinder **4** is provided with both the atmospheric air inlet **40** and the inlet **45** of compressed air from the compressed air system of the machine user.

If the compressed air from the user's system **160** of compressed air meets the requirements for purity and humidity imposed on the air supplied to the machine, especially the air-cooling machine, it is not necessary to clean and dehumidify the air before entering the machine and the air outlet **44** from the pressure cylinder **4** is connected directly to the inlet valve **12** of the air-cooling machine. In this embodiment, too, the safety valve **41,** the air pressure sensor 42 and the condensate outlet valve **43** are connected to the pressure cylinder **4.** Downstream of the inlet valve **12** of the air-cooling machine is arranged the flow regulator **13,** between which and the air inlet **15** to the air-cooling machine, the third check valve **1** is arranged.

In cases when the user of the air-cooling machine has his own compressed air system meeting all the requirements for the operation of the air-cooling machine, this compressed air can be suppled directly to the air inlet **15** into the air-cooling machine and the device according to the invention does not need to be used.

The air inlet **15** to the cooling machine is formed on the system of an electric motor, a turbocharger and a turbodetander.

### Industrial applicability

The invention relates to the field of refrigeration technology and can be used for producing refrigeration units, freezing chambers, rapid cooling systems, air conditioning systems and/or temperature maintenance systems.

The air preparation system is applicable to air-cooling machines and other equipment that use compressed dry air as a working medium.

### List of references

- 1: atmospheric air suction inlet
- 2: piston compressor
- 3: dedusting filter
- 4: pressure cylinder
- 40: atmospheric air inlet to the pressure cylinder
- 41: safety valve of the pressure cylinder
- 42: air pressure sensor in the pressure cylinder
- 43: condensate drain valve
- 44: air outlet from the pressure cylinder
- 45: compressed air inlet from the machine user's compressed air system
- 5: air cooler
- 51: first part of the air cooler
- 52: second part of the air cooler
- 6: regulating pressure relief valve
- 7: first check valve
- 8: outlet valve of the pressure cylinder
- 9: filter of coarse impurities
- 10: filter of fine impurities
- 11: membrane dryer
- 100: cleaning and drying section
- 12: machine inlet valve
- 13: flow regulator
- 14: third check valve
- 15: air inlet to the machine
- 16: second check valve
- 160: machine user's compressed air system

## Claims

1. An air preparation device for an air-cooling machine, **characterized in that** it comprises a pressure cylinder (4) provided with at least one inlet (40, 45) of compressed air and an outlet (44) of compressed air, downstream of which an air cleaning and dehumidifying section (100) is arranged, the outlet of which is connected to an air inlet (15) to the machine, the pressure cylinder (4) being provided with an atmospheric air inlet (40) and a piston compressor (2) connected to the atmospheric air inlet (40) of the pressure cylinder (4) via a first check valve (7) is connected to the atmospheric air inlet (1), whereby between the first check valve (7) and the piston compressor (2), a pressure regulating valve (6) discharging to the atmosphere is included.

2. The device according to claim 1, **characterized in that** the pressure cylinder (4) is provided with an inlet (45) of compressed air from the machine user's compressed air system.

3. The device according to claim 1, **characterized in that** a dedusting filter (3) is arranged upstream of the piston compressor (2).

4. The device according to claim 1 or 3, **characterized in that** an air cooler (5) is arranged between the piston compressor (2) and the first check valve (7.

5. The device according to claim 4, **characterized in that** the air cooler (5) consists of two parts, wherein in the first part (51) of the cooler (5), atmospheric air is the cooling medium, and in the second part (53) of the cooler (5), the cooling medium is the air from the cooling chamber of the air-cooling machine.

6. The device according to claim 2, **characterized in that** the inlet (45) of compressed air of the pressure cylinder (4) is via the second check valve (16) connected to the machine user's compressed air system (160).

7. The device according to any of the preceding claims, **characterized in that** the cleaning and drying section (100) comprises an outlet valve (8) of the pressure cylinder (4), a filter (9) of coarse impurities, a filter (10) of fine impurities and a membrane dryer (11), which are arranged in the direction of air flow one after the other.

8. The device according to any of the preceding claims, **characterized in that** between the outlet of the cleaning and drying section (100) and the air inlet (15) to the machine, an inlet valve (12) of the machine, a flow regulator (13) and a third check valve (14) are arranged one after the other in the direction of air flow.

9. The device according to any of the preceding claims, **characterized in that** the pressure cylinder (4) is provided with a safety valve (41), an air pressure sensor (42) and a condensate drain valve (43).

10. The air preparation device for an air-cooling machine according to any of the preceding claims, **characterized in that** the air inlet (15) to the air-cooling machine is formed on the system of an electric motor, a turbocharger and a turbodetander.
